# EUROPEAN PATENT SPECIFICATION

(11) **EP 3 907 195 B1**
(45) Date of publication and mention of the grant of the patent: **16.04.2025**
(21) Application number: 20173016.5
(22) Date of filing: 05.05.2020
(51) Int. Cl.: C02F 3/32, C02F 3/08, C02F 1/00, C02F 1/24, C02F 103/20, C02F 101/16, C02F 3/28

(54) **A PHOTOTROPHIC ORGANISM WASTEWATER TREATMENT APPARATUS, AND THE PROCESS THEREOF**
VORRICHTUNG ZUR BEHANDLUNG VON ABWASSER MIT PHOTOTROPHEN ORGANISMEN UND VERFAHREN DAFÜR
APPAREIL DE TRAITEMENT DES EAUX USÉES PAR DES ORGANISMES PHOTOTROPHES ET SON PROCÉDÉ

(43) Date of publication of application: 10.11.2021
(73) Proprietor: Fagan, John David, 1990-156 Lisbon (PT)
(72) Inventor: Fagan, John David, 1990-156 Lisbon (PT)
(74) Representative: Sonnenberg Harrison Partnerschaft mbB

(56) References cited:
- EP-A1- 2 236 466
- US-A- 5 853 591
- US-A1- 2008 135 474
- US-A1- 2013 256 223

## Description

### TECHNICAL FIELD

The present invention relates to the environmental safety field and, specifically, to the treatment of domestic and industrial wastewaters.

In particular, the present invention relates to an apparatus, and to the relevant process, for the treatment of domestic and industrial wastewaters.

More in particular, the present invention relates to an apparatus, and to the relevant process, for the treatment of wastewaters by phototrophic organisms comprising algae and phototrophic heterotrophic bacteria.

The present invention is preferably and advantageously applied for the treatment of municipal wastewater or sewage for smaller communities of up to twenty thousand people, the treatment of recycled water for aquaculture (fish farming) and certain industrial wastewater.

### KNOWN PRIOR ART

Conventional wastewater treatment processes use almost exclusively non-phototrophic heterotrophic bacteria in an aerobic environment.

These bacteria obtain their energy and carbon for cell growth from the oxidation of the dissolved, colloidal and suspended organic matter in the wastewater.

Providing this aerobic environment requires that large quantities of oxygen O₂ to be dissolved in the wastewater, usually achieved by blowing air into tanks of around 5 m water depth, as this provides the best efficiency at around 20% dissolution of the available oxygen O₂ in air, or by mechanical agitation.

The electrical energy consumption for conventional treatment process of 4,000 m³/d is 0.48 to 0.780 kWh/m³ of treated wastewater (see: Journal of Water Sustainability, Volume 6, Issue 2, June 2016, 63-76; Analysis of Energy Consumption and Saving in Wastewater Treatment Plant: Case Study from Ireland Olumide Wesley Awe, Ranbin Liu, Yaqian Zhao).

The U.S. Environmental Protection Agency (EPA) reports that wastewater treatment plants use some 3% of the total U.S. electrical demand; electrical energy costs represent some 50-55% of the total operational cost of conventional wastewater treatment.

Across the European Union (EU), there are around 16,000 to 18,000 wastewater treatment plants (WWTPs); in the EU, power consumption for the treatment of wastewater ranges between 0.3-2.1 kWh/m³ (see: Sustainability 2020, 12, 266; doi:10.3390/su12010266).

Treatment of wastewater is necessary to prevent pollution from being discharged into water courses, with the potential to cause both environmental and public health issues.

It can also provide water that is clean enough for re-use in certain contexts, which can be particularly useful in areas suffering from water stress.

However, re-use of treated water is currently restricted by the fact that it is often more expensive than municipal water supply water.

This is largely due to the high energetic demand of WWTPs.

WWTPs in the EU consume around 10,000 GWh/year of mains electricity.

Furthermore, the volume of wastewater being treated in the EU is increasing by around 7% each year.

As well as the financial cost, this energy consumption creates an additional environmental burden.

Mains energy in Europe is typically produced from the burning of fossil fuels, with its associated environmental costs.

Energy consumption for WWTPs creates emissions of more than 27×10⁶ tones/year of carbon dioxide CO₂ in the EU; in Spain alone, WWTPs consume 2,213 GWh/year, emitting more than 6 ×10⁶ tones/year of carbon dioxide CO₂.

Total Green House Gas (GHG) emissions for wastewater treatment amount to some 24 to 66 kgCO₂e/PE/a (kilograms of CO₂ equivalent per Population Equivalent per Year), 60% of which emanates from the electricity generation.

Conventional wastewater treatment systems inherently produce large quantities of waste solids and excess biomass (residuals) that must be further treated and disposed of, usually off site for smaller treatment capacity systems.

The cost related to residuals disposal for conventional treatment systems represents some 15% of the total operations cost with the quantity of waste biomass generally proportional to the organic content of the influent wastewater.

Biomass transport, treatment and/or disposal contributes significantly to GHG emissions by whatever means of disposal is considered, land application, landfilling or incineration as destruction of residual organic content leads to emissions of methane (contributing twenty-one times more to greenhouse effects than carbon dioxide CO₂) or carbon dioxide CO₂.

In addition, conventional bacteriological wastewater treatment systems for smaller communities, that is Population Equivalents (PE) of 5,000 or less, are among the highest proportion that fail to meet the relevant regulated discharge quality standards, as these systems work more efficiently and reliably at a larger scale; these systems also require regular human intervention from skilled personnel to operate reliably at peak performance.

In water stressed areas of the world, such as the Middle East and other arid areas, the reuse of treated wastewater is becoming more necessary and common, however this requires a high level of treatment in order to minimise health and other impacts of treated wastewater reuse.

In most cases achieving the requisite levels of treatment requires the installation of either more sophisticated and expensive treatment systems such as membrane bioreactor (MBR) systems or additional treatment steps after conventional treatment, comprising the use of filtration technologies, higher levels of disinfection and advanced oxidation processes (AOPs) among others.

This significantly impacts the installation and operating costs of achieving reuse quality wastewater.

The application of this level of treatment to smaller scale systems is often difficult to justify due to both capital and operational costs and the advanced skills required by and the level of operator input required.

Small community systems typically do not have dedicated well trained operations staff monitoring and controlling them and usually rely on periodic visits by personnel who perform multiple duties for the communities.

Therefore, the need of suitable process and operator intervention requirements still exists, which can generally operate successfully with this periodic visit level of operator input.

A wastewater treatment process using algae is also known and it is described in EP2236466A1.

According to the aforesaid document, a self-sustaining wastewater treatment facility abates greenhouse gas emissions, captures carbon dioxide CO₂ and produces biomass to address multiple critical environmental needs; the facility comprises an array of rotating media wheels that create an optimum ordered mixing of algae for sustained growth.

Biomass harvested from the rotating media wheels may be provided to other processing facilities to produce, for instance, biofuels.

Waste carbon dioxide CO₂ from the processing facility may also be returned to the treatment system for enhanced algae growth.

Bacteria are provided to form a symbiotic relationship with the algae, fuelled by sunlight to effectively remove toxic materials from the wastewater.

The multi-functional facility may also be integrated into a regenerative facility in which the biomass obtained from the algal and bacterial colonies is used in a separate facility and by-products of the operation of the separate facility are used by the multi-functional facility to fuel further algal growth.

The solution described in the aforesaid document, though reporting a wastewater treatment process using algae, employs a plug flow process and uses algae primarily as a source of O₂ for conventional bacteria.

The symbiotic use of algae and conventional autotrophic and heterotrophic bacteria has a major disadvantage in that those bacterium groups are generally not translucent and are attracted to the sticky polysaccharide encasement of the algae, severely limiting photosynthetic light wavelength penetration and hence the photosynthesis rate of the algae.

In addition, each of the of rotating media wheels are supported by and contained within a grid arrangement that effectively forms a containment box around them, which will limit light penetration to the biomass and inhibit the movement and removal of excess biomass.

Additionally, the solution described in the aforesaid document does not appear to have any effective means for the removal of excess biomass, which will likely result in the collection and putrefaction of the excess biomass within the system. This will ultimately starve the autotrophic and heterotrophic bacteria of oxygen and result in reduced or total cessation of the effectiveness of the process.

Therefore, the need for a complete mixed system and of an active limitation of the propagation of conventional non-phototrophic, autotrophic and heterotrophic bacteria in preference to phototrophic bacteria still exist.

None of the known technical solutions, nor any combination thereof, is able to provide an apparatus, and the relevant process, for the treatment of wastewaters by phototrophic organisms comprising algae and phototrophic heterotrophic bacteria. In particular, none of the known technical solutions, nor any combination thereof, are able to provide the enhanced reaction rates for treatment with a hydraulic retention time of between 4 and 8 hours.

Moreover, none of the known technical solutions, nor any combination thereof, is able to provide a process and apparatus that achieves the very low electrical energy consumption and resulting low to negative carbon footprint.

Finally, none of the known technical solutions, nor any combination thereof, is able to provide the formation of an oxidising environment that achieves a level of disinfection and destruction of otherwise untreatable trace organic compounds while maintaining an active biomass for treatment.

Therefore, even if many technical solutions are available for treatment of domestic and industrial wastewaters, there still exists the need of an apparatus, and of the relevant process, for the treatment of wastewaters by phototrophic organisms comprising algae and phototrophic heterotrophic bacteria.

In brief therefore, up to the present time, to the Applicant's knowledge, there are no known solutions allowing to provide an apparatus, and the relevant process, for the treatment of wastewaters by phototrophic organisms comprising algae and phototrophic heterotrophic bacteria such that:
- light availability to the phototrophic organisms is optimised;
- excess biomass can freely move within the biological reactors;
- excess biomass can be effectively and easily removed from the biological reactors;
- the oxidative and disinfecting environment within the reactors is optimised.

Therefore the Applicant, with the apparatus and the relevant process for the treatment of wastewaters by phototrophic organisms comprising algae and phototrophic heterotrophic bacteria according to the present invention, intends to remedy such lacks.

### OBJECTS AND SUMMARY OF THE INVENTION

It is an object of the present invention to overcome the drawbacks of the known prior art related to the environmental safety field and specifically to the treatment of domestic and industrial wastewaters.

It is a specific object of the present invention to overcome the drawbacks of the known prior art related to the treatment of domestic and industrial wastewaters using non-phototrophic heterotrophic bacteria in an aerobic environment.

It is also a specific object of the present invention to overcome the drawbacks of the known prior art related to the treatment of domestic and industrial wastewaters using algae primarily as a source of O₂ for conventional bacteria under a plug flow arrangement.

The present invention intends to solve the problem of influencing a number of critical environmental issues either not addressed by conventional treatment methods, or those methods add to those issues, comprising energy efficiency, greenhouse gas (GHG) emissions, reduced production of and beneficial use of the waste biomass as renewable energy, fertiliser or other uses.

In particular, the present invention aims at providing an apparatus, and the relevant process, resulting in a treated wastewater of higher quality in terms of pathogenic bacteria, trace organic material such as pharmaceuticals and hormones than conventional treatment processes can achieve, thus making it highly suitable for reuse applications.

The invention achieves these objects by optimising the necessary conditions for the phototrophic biological treatment of wastewater using phototrophic heterotrophic bacteria and algae in a symbiotic relationship, therefore negating the necessity to provide large volumes of oxygen O₂ by electrically driven mechanical equipment to dissolve the necessary levels of oxygen O₂ into the water from air or direct oxygen O₂ injection.

The invention further provides for an ideal environment for the phototrophic heterotrophic bacteria and algae to be attached to a rotatable "Log", with extended surface area, rather than being free floating in the wastewater, thereby maintaining high clarity of the wastewater to be treated and leading to high rates of photon penetration from sunlight or alternative artificial light sources both onto the phototrophic organisms and algae as well as into the water for the optimisation of photosynthetic activity and growth of the biofilms.

The invention further provides for the removal of excess, dislodged biofilm within the reactor via a settling zone with a 60° angled sidewall to maintain high wastewater clarity entering the second stage and thereby optimising further the rate of treatment.

In addition the invention provides for the maintenance of complete mixed conditions within the reactor stages to maintain optimal contact between the phototrophic biomass and the contaminants to be removed as well as minimising the inhibitory effects of shock loadings at various areas within the reactor stages.

By providing a two-stage reactor process, the invention takes advantage of the naturally occurring self-selection of phototrophic biological species to optimise the removal of different pollutants in the separate stages, therefore optimising the time necessary for the treatment process to reach the necessary removal rates to meet regulatory, or more stringent, standards.

The aforesaid and other objects and advantages of the invention, as will appear from the following description, are achieved with a phototrophic organism wastewater treatment apparatus according to claim 1.

Moreover, the aforesaid and other objects and advantages of the invention are achieved with a phototrophic organism wastewater treatment process according to claim 8.

Preferred embodiments and variants of the apparatus and of the process of the present invention are the subject-matter of the dependent claims.

It will be immediately evident that several modifications (for example relevant to shape, sizes, arrangements and parts with equivalent functionality) could be brought to what is described without departing from the scope of the invention as claimed in the appended claims.

Advantageously, the technical solution according to the present invention allows:
- the treatment of wastewater with minimised electrical energy input;
- the minimising of wastewater treatment carbon footprint and related environmental impact;
- the treatment of wastewater with minimal, if any, chemical addition;
- the maximisation of light availability to the phototrophic organisms;
- the optimisation of light/ dark sequencing for best performance;
- the excess biomass to freely move within the reactors;
- the rotation of the Logs to move the excess biomass to the settling zones for effective removal;
- wastewater treatment with no mains electricity supply;
- optimisation of performance with artificial light where necessary;
- the production of treated wastewater suitable for a range of reuse applications; and
- the maximisation of chemical energy within the waste solids for energy recovery.

Further advantageous features will appear more evident from the following description of preferred but not exclusive embodiments, merely given by way of explanatory and not limiting example.

### BRIEF DESCRIPTION OF THE DRAWINGS

The present invention will be described hereinbelow by means of some preferred embodiments, given by way of explanatory and not limiting example, with reference to the accompanying drawings. These drawings illustrate different aspects and examples of the present invention and, where appropriate, similar structures, components, materials and/or elements in different figures are denoted by similar reference numbers.
Figure 1 is a schematic view of a treatment system according to the invention.
Figure 2 is an elevation in section of one embodiment of the treatment reactor of the system.
Figure 3 is a plan view of one embodiment of the treatment reactor of the system.
Figure 4 is elevation and cross section of one embodiment of the rotatable log comprising extended surfaces for supporting phototrophic bacteria and algal growth.
Figure 5 is an elevation in section of one embodiment of the treatment reactor located in a greenhouse with photovoltaic collector panels and supplemental artificial lighting.

For clarification sake, the following list of the reference numerals used in the accompanying drawings is provided:
1. Treatment system
2. Source of wastewater
3. Clarification Device
4. Equalisation/pre-conditioning vessel
5. Pre-conditioning chemical feed
60. Treatment tank (comprising 6, 7, 8, 9 below)
6. Primary treatment reactor compartment
7. Primary settling zone compartment
8. Secondary treatment reactor compartment
9. Secondary settling zone compartment
10. Dissolved Air Flotation (DAF) chemical feed
11. DAF reactor
12. Sulphur denitrification system
13. Disinfection apparatus
14. Excess solids holding/thickening tank
15. Primary settling zone solids extraction conduit
16. Pre-conditioned wastewater transfer/distribution system
17. Primary settling zone waste solids transfer pump
18. Decanter mechanism for excess solids holding/thickening tank
19. Pre-conditioned wastewater conduit and influent distributor
20. Rotatable log assembly
21. Primary reactor baffle
22. Primary settling zone adjustable overflow weir
23. Primary settling zone baffle
24. Reactor sidewall
25. Reactor base settling cone
26. Primary settling zone excess solids extractor
27. Log rotation air distribution hose
28. Adjustable treated wastewater discharge syphon assembly
29. Secondary reactor baffle
30. Reactor base
31. Log axle
32. Longitudinal fins
33. Circumferential fins
34. Post aeration apparatus
35. Greenhouse Structure
36. Polycarbonate equator facing panels
37. Photovoltaic panels
38. Supplemental Artificial light source
39. Support bearing assembly
40. Log Hanger
41. Ventilator Louvers

### DETAILED DESCRIPTION OF THE INVENTION

It should be understood, however, that there is no intention to limit the invention to the specific illustrated embodiments but, on the contrary, the invention intends to cover all the modifications, alternative constructions and equivalents that fall within the scope of the invention as defined in the claims.

In the following description, therefore, the use of "for example", "etc." and "or" denotes non-exclusive alternatives without limitation, unless otherwise indicated; the use of "also" means "among, but not limited to", unless otherwise indicated; the use of "comprises" means "comprises, but not limited to", unless otherwise indicated.

In the present specification, the following terms have the following meanings:
- "apparatus / facility / plant" means all or any individual component part of the described embodiment; in the present specification the terms "apparatus", "facility" and "plant" are used indistinguishably, as synonyms;
- "biomass / bio-film / micro-organisms" means the mixed species of algae, phototrophic organisms and other bacteria that grow and effect treatment within the apparatus; in the present specification the terms "biomass / bio-film / micro-organisms" are used indistinguishably, as synonyms.

The present invention is based on the innovative concept of providing an apparatus, and to the relevant process, for the treatment of wastewaters by phototrophic organisms comprising algae and phototrophic heterotrophic bacteria.

Specifically, the present invention provides an efficient and competitive apparatus, and the relevant process, suitable for the treatment of domestic and industrial wastewaters and recirculating aquaculture water.

Independent aspects of the present invention, which will be described in detail hereinafter, refer to:
- a phototrophic organism wastewater treatment apparatus, and
- a phototrophic organism wastewater treatment process.

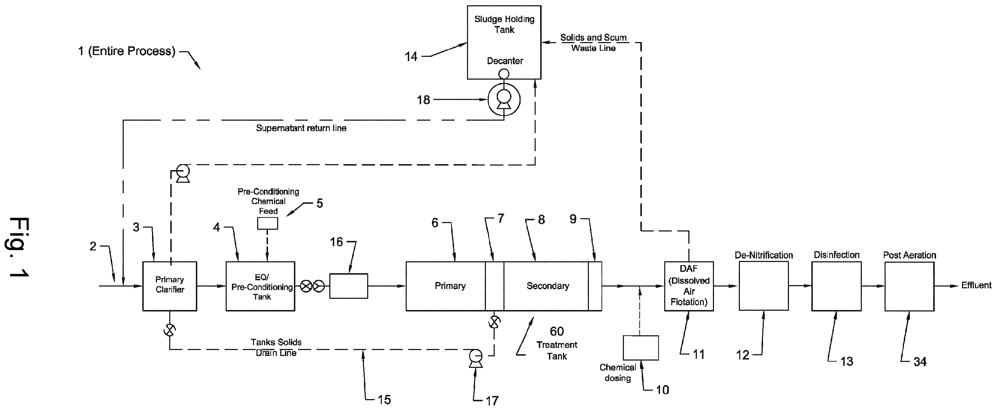

The treatment system 1 is shown schematically in Figure 1.

Wastewater flows through a conduit 2 from an upstream source of municipal, agricultural or industrial effluent to a primary clarification device 3.

Wastewater is periodically mixed with Excess Solids Holding / Thickening Tank 14 decanted supernatant in the conduit 2.

Excess biomass from the Primary Settling Zone 7 from the Algae and Phototrophic Bacteria Reactor 6 are returned to the primary clarification device 3 to make use of the coagulant properties of the polysaccharide content of this material that is naturally produced by certain species of algae.

The primary clarification device 3 serves to settle suspended and colloidal solid material from the incoming wastewater.

This maximises the potential for energy recovery from the settled organic containing solids, as well as producing a low turbidity and suspended solids containing wastewater to minimise the effects of suspended and colloidal solids on the transmission of light photons to the phototrophic organisms. The solids material collected in the Primary Clarification Device 3 are periodically transferred to the Excess Solids Holding / Thickening Tank 14.

After leaving the primary clarifier the clarified wastewater flows to an Equalisation / Pre-Conditioning Tank (4) that serves a number of purposes comprising
- evening out the incoming flow rate and pollutant concentration variations that can occur in sewerage collection systems and industrial effluents;
- enable a relatively stable flow rate via a positive displacement pump system 16, or alternative means, to provide a feed devoid of sudden pollutant concentration spikes to be delivered to the biological reactors;
- the opportunity, where necessary such as in some industrial wastewaters, to add via the Pre-conditioning Chemical Feed System 5 necessary nutrients and/or trace elements for the optimal performance of the micro-organisms in the biological reactor;
- add chemical to control infestations of unwanted non-phototrophic bacteria or predators.

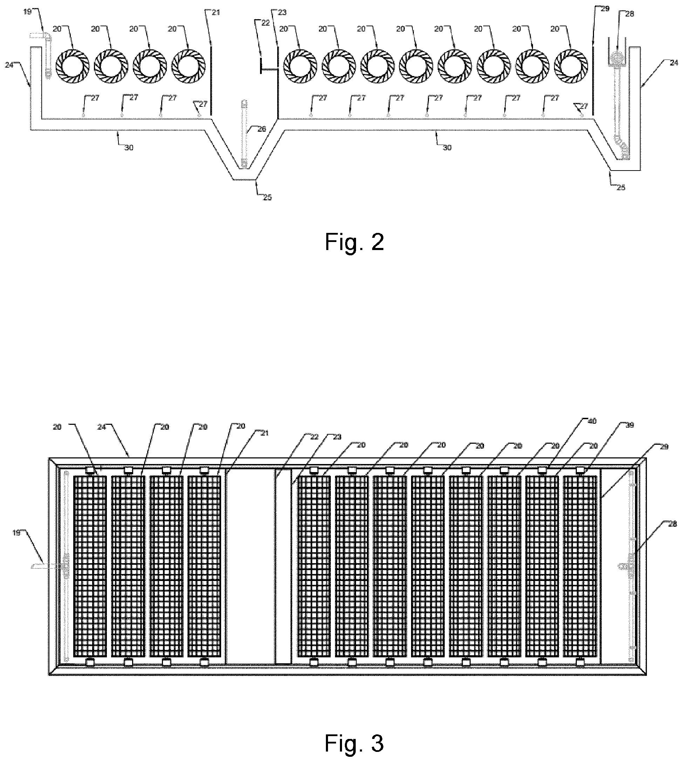

The wastewater to be treated then flows through a conduit and distribution header 19 - as illustrated in Figures 2 and 3 - to the "Primary Stage" 6 of the biological reactor.

The Primary Stage 6 reactor has a number of plastic "Rotatable Log Assemblies" 20 onto which the algae and phototrophic bacteria attach themselves in a sticky biofilm of single cellular algae that form filaments, diatoms that form part of the biofilm, as well as some being free floating, and phototrophic bacteria.

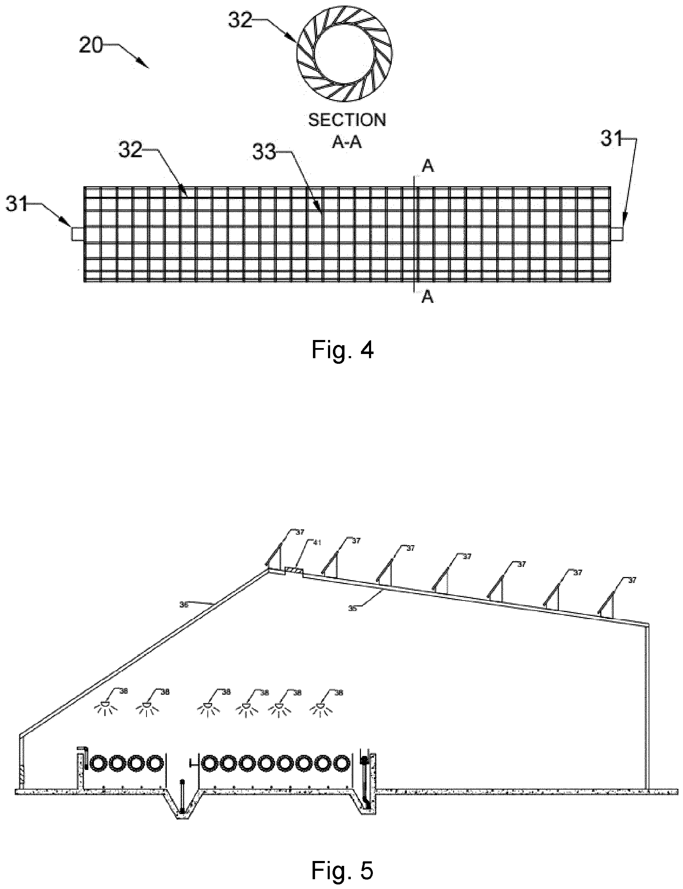

Each Rotatable Log Assembly 20 - as illustrated in Figure 4 - is mounted in the treatment tank 60 so that they are partially submerged and partially not submerged into the wastewater.

The construction comprises a short log axle 31 that allows for the free rotation of the log but restricts its horizontal and vertical movement.

This log axle 31 is supported by a plastic support bearing assembly 39 that can be height adjusted in the log hangers 40.

The log axle 31 and the support bearing assembly 39 are lubricated by the wastewater and manufactured of the same material to minimise wear.

The material of construction of the log axle 31 and the support bearing assembly 39 is a self-lubricating plastic material.

The design of the Rotatable log assembly 20 longitudinal fins 32 is such that they catch air bubbles from the Log Rotation Air Distribution Hoses 27.

The air that is caught under these fins induces a buoyant effect pushing the fin, and hence the portion of the log toward the surface, causing the logs to slowly rotate. This rotation of the logs has multiple impacts on the biofilm and the wastewater in the reactor:
- firstly, the rotation causes the biofilm to be repetitively exposed and not exposed to light, which induces higher activity rates of the biofilm;
- secondly, this rotation into and out of the wastewater assists in the respiration of the biofilm, leading to enhanced activity;
- thirdly, the constant movement within the wastewater ensured turbulence at the biofilm wastewater interface, thus a constant fresh supply of nutrients and carbon source in available to the micro-organisms making up the biofilm;
- finally, the rotation of the Rotatable log assembly 20 and the air bubbles from the air tubes induces sufficient turbulence in the tank to maintain complete mixed conditions.

The Rotatable Log Assembly 20 also have Circumferential Fins 33 that provide additional surface area for the attachment of biofilm.

The wastewater then passes under the Primary Reactor Baffle 21 to the Primary Treatment Settling Zone 7.

This zone is designed to allow any free-floating algae or excess biofilm that is dislodged from the logs to settle and collect into the Primary Reactor Base Settling Cone 25.

This settled biomass is continuously removed through the Primary Settling Zone Excess Solids Extractor 26 via the Primary settling Zone Waste Solids Transfer Pump 17 and conduit 15 and returned to the Primary Clarifier 3.

The clarified wastewater then overflows the Primary Settling Zone Adjustable Weir 22 and passes through the Primary Settling Zone Baffle 23 to the Secondary Treatment Reactor 8.

The Secondary Treatment Reactor 8 has, as in the Primary Treatment Reactor 6, a number of plastic "Rotatable Log Assembly" 20 onto which the algae and phototrophic bacteria attach themselves in a sticky bio-film of single cellular algae that form filaments, diatoms that form part of the biofilm, as well as some being free floating, and phototrophic bacteria.

As the wastewater characteristics are different in the Secondary Treatment Reactor 8, with almost all the BOD/COD removed and more than 50% of the ammonia oxidised or used by the microorganisms, the make-up of the bio-film is different with a higher proportion of algae than in the Primary Treatment Reactor 6 bio-film.

The Rotatable Log Assembly 20 are supported in the same way and turn the same by the introduction of a small quantity of air through the Log Rotation Air Distribution Hoses 27 as in the primary stage reactor 6.

The wastewater then passes under the Secondary Reactor Baffle 29 to the Secondary Treatment Settling Zone 9 where the wastewater together with any excess biomass is removed by a height Adjustable Discharge Syphon Assembly 28.

After biological treatment the treated wastewater is transferred to a Dissolved Air Flotation DAF Reactor 11, where a small return portion of water has a small amount of air dissolved in it under pressure.

This under pressure air saturated water is re-introduced into the feed to the DAF Reactor 11 where the pressure is released and the dissolved air comes out of solution as tiny bubbles.

These tiny bubbles attach to any solids present in the wastewater and float them to the surface of the water.

The floating solids of excess biomass of Algae and phototrophic bacteria are then scraped off and transferred to the Excess Solids Holding / Thickening Tank 14. There is an option to dose chemical before the DAF 11 through a chemical dosing system, the Dissolved Air Flotation DAF Chemical Feed 10 to either enhance flocculation and flotation or to remove excess Phosphorus P in the DAF system. Following the removal of any excess solids in the DAF Reactor 11 the wastewater is essentially free from organic and suspended solids pollutants but still contains dissolved, oxidised forms of Nitrogen N mostly as Nitrate NO₃⁻.

As regulators may place low NO3- discharge limitations on treated wastewater for reuse or discharge to sensitive environments it is often necessary to further remove this compound.

This embodiment of the invention uses a Sulphur Denitrification System 12.

The system comprises a media filter followed by a bed of granular sulphur on which the anoxic bacteria grow converting NO³⁻ to Nitrogen gas N₂ that effervesces from the wastewater.

The Thiobacillus denitrificans bacteria that perform this action are naturally occurring and are present almost everywhere in the environment, however the system comprises a final media filter to remove these bacteria and any small sulphur particles before discharge. The NO₃⁻ is replaced by SO₃⁼ Sulphate which is much less detrimental to the discharge environment.

Although the invention is extremely good at disinfecting the wastewater, as a safety precaution an appropriate Disinfection Apparatus 13 will be installed prior to final discharge of the treated wastewater until such time as regulatory approval does not require this for the present invention.

The disinfection apparatus could be either chlorination and de-chlorination or an Ultraviolet light disinfection system or some variant.

In some circumstances regulators require that a minimum level of dissolved oxygen O₂ be maintained in the effluent discharge.

A Re-aeration apparatus 34 will be installed in the form of either a small tank into which air is blown, or a cascade re-aerator.

Solids removed from the wastewater in the Primary Clarifier 3, Primary Settling Zone 7 and the DAF Reactor 11 are all transferred to the Excess Solids Holding / Thickening Tank 14.

The tank is intermittently aerated for mixing and for the prevention of the formation of anaerobic conditions leading to the generation of sulphide gas and other foul odours. It is also fitted with a Decanter Mechanism 18 to remove excess water from the tank that is returned to the primary clarifier 3 inlet for re-processing.

This ensures that the volume of waste solids to be disposed off site is as small as possible, and also that if it is sent for energy recovery treatment that the energy content is maintained as high as possible.

As with most biological processes, the maintenance of optimal operating temperatures of between 20 °C and 40 °C is necessary to achieve peak performance and this invention requires these conditions to achieve that optimal performance.

This embodiment of the invention houses the system within a Greenhouse Structure 35 in order to assist in maintaining a constant temperature during cooler seasonal conditions.

The Greenhouse structure 35 is fitted with roof and floor level Ventilator Louvers 41 to control temperature within the greenhouse 35.

The operation of the Ventilator Louvers 41 is automatic based on air temperature within the greenhouse 35.

The Greenhouse Structure 35 also protects the process from other weather related interferences such as heavy rain, hail, snow or excessive dust or sand.

In locations where the strength of or the duration of sunlight hours is insufficient for optimal performance or where the location may not have sufficient or any exposure to the sun, the Greenhouse structure is fitted with an array of appropriate Supplemental Artificial Light Source 38 to replicate the photon strength required for the performance of the system.

This embodiment of the invention has an array of Photovoltaic Panels 37 mounted on the roof of the Greenhouse Structure 35 such that they do not interfere with the ingress of sunlight through the Polycarbonate Equator Facing Panels 36 of the Greenhouse Structure 35.

The Photovoltaic Panels 37 are sufficient to supply the electrical energy for the entire process for greater than 80% of each year, depending on weather conditions.

In general, with reference to Figures 1 to 4, a phototrophic organism wastewater treatment apparatus 1 according to one aspect of the present invention, independent and autonomously usable with respect to the other aspects of the invention, comprises:
- an inlet flow path 2 for receiving and pre-treatment of wastewater from a source;
- a first stage pre-treatment system 3, 4, 5 comprising:
   ▪ a primary clarification device 3,
   ▪ an equalisation and pre-conditioning tank 4, and
   ▪ a pre-conditioning chemical feed 5, connected to said equalisation and pre-conditioning tank 4;
- at least one containing tank 60 with four compartments 6, 7, 8, 9 for containing wastewater received through said inlet flow path 2 and first stage pre-treatment system 3, 4, 5;
- a division of said at least one containing tank 60 into four compartments 6, 7, 8 9;
   wherein said four compartments are arranged in series and they are, respectively, a primary treatment reactor compartment 6, a primary settling zone compartment 7, a secondary treatment reactor compartment 8 and a secondary settling zone compartment 9;
- a plurality of rotatable log assembly 20 with extended surface area of longitudinal fins 32, angled in such a manner as to trap air to facilitate buoyant rotation, and circumferential fins 33, mounted in said at least one containing tank for rotation within the wastewater and each containing a phototrophic heterotrophic bacterial colony capable of digesting organic carbon in the wastewater and respiring carbon dioxide CO₂, and an algal colony that uses the carbon dioxide CO₂ and respires oxygen O₂ and each rotatable log assembly 20 comprising surfaces for supporting phototrophic bacteria and algal growth, said surfaces arranged to
   ▪ be alternately immersed into and out of the wastewater and
   ▪ be alternatively exposed and not exposed to a light source of either or both of sunlight or artificial light;
- an air supply 27 arranged within said at least one containing tank 60 compartments 6, 8 and having a plurality of outlets directed at a corresponding one of said plurality of rotatable log assembly 20 to rotate said rotatable log assembly 20 within the wastewater, said air supply 27 capable of being intermittently operable at a higher air flow rate to agitate the rotatable log assembly 20 and the wastewater, and
- an outlet 28 for discharge of effluent treated by said treatment system after contact with the phototrophic bacteria and algae attached to the said rotatable log assembly 20;
- two integral settling zones 7 and 9, the first one 7 disposed between two of said compartments 6 and 8 of said at least one containing tank 60 and the other one 9 at the outlet end of said tank compartment 8, said settling zones operable to remove bio solids from or with the wastewater;
- a Dissolved Air Flotation DAF unit 11 downstream of said at least one containing tank 60 to affect the removal of excess biomass extracted with the treated wastewater;
- a sulphur de-nitrification system unit 13 downstream of said DAF unit 11 consisting of a number of filtration and sulphur contact vessels;
- a disinfection unit 13 downstream of said DAF unit 11;
- a post-aeration unit 34 downstream of said disinfection unit 13;
- a receiving tank 14 for receiving settled solids and biomass extracted by said primary clarification device 3 and said DAF unit 11, fitted with supernatant decanting apparatus 18 and mixing/ aeration apparatus.

Preferably the wastewater treatment apparatus according to the present invention is such that each of said four compartments 6, 7, 8, 9 defines an interior portion communicating with the wastewater within a corresponding one of said tanks 60, said interior portion containing phototropic bacteria and algae.

Preferably the wastewater treatment apparatus according to the present invention further comprises a plurality of rotatable log assembly 20 with extended surface area of longitudinal 32 and circumferential 33 fins mounted such that they can rotate on their axis.

Preferably the wastewater treatment apparatus according to the present invention is such that each compartment 6, 8 with a plurality of rotatable log assembly 20 with extended surface area of longitudinal and circumferential fins develops a complete mixed flow pattern of wastewater through each compartment.

Preferably the wastewater treatment apparatus according to the present invention further comprising an air distribution system, said air distribution system comprising an air permeable flexible hose or pipe 27 said hose or pipe defining an air distributor along each of the said rotatable log assembly 20 and so positioned for directing of air to rotate each said rotating tube with extended surface area of longitudinal and circumferential fins.

Preferably the wastewater treatment apparatus of the present invention is adapted such that said treatment systems can be housed within a greenhouse 35.

Preferably the wastewater treatment apparatus according to the present invention is adapted such that said greenhouse can be fitted with a photovoltaic electricity generation and storage system 37.

Preferably the wastewater treatment apparatus according to the present invention is such that said tanks 60 comprising compartments 6, 7, 8, 9 are provided with a lightning system wherein said lighting system 38 comprises an array of artificial lights as supplement to or replacement of sunlight.

In general, a phototrophic organism wastewater treatment process according to another aspect of the present invention, independent and autonomously usable with respect to the other aspects of the invention, comprises the following steps:
- step 100: receiving and pre-treating wastewater from a source through an inlet flow path 2;
- step 101: firstly pre-treating through a pre-treatment system 3, 4, 5 comprising:
   ▪ a primary clarification device 3,
   ▪ an equalisation and pre-conditioning tank 4, and
   ▪ a pre-conditioning chemical feed 5, connected to said equalisation and pre-conditioning tank 4;
- step 102: containing wastewater received through said inlet flow path 2 and first stage pre-treatment system 3, 4, 5 in at least one containing tank 60;
- step 103: dividing said at least one containing tank 60 into four compartments 6, 7, 8, 9;
   wherein said four compartments are arranged in series and they are, respectively, a primary treatment reactor compartment 6, a primary settling zone compartment 7, a secondary treatment reactor compartment 8 and a secondary settling zone compartment 9;
- step 104: providing a plurality of rotatable log assembly 20 with extended surface area of longitudinal fins 32, angled in such a manner as to trap air to facilitate buoyant rotation, and circumferential fins 33, mounted in said at least one containing tank 60 compartments 6 and 8 for rotation within the wastewater and each containing a phototrophic heterotrophic bacterial colony capable of digesting organic carbon in the wastewater and respiring carbon dioxide CO₂, and an algal colony that uses the carbon dioxide CO₂ and respires oxygen O₂ and each rotatable tube comprising surfaces 32, 33 for supporting phototrophic bacteria and algal growth, said surfaces arranged to
   ▪ be alternately immersed into and out of the wastewater and
   ▪ be alternatively exposed and not exposed to a light source of either or both of sunlight or artificial light;
- step 105: providing an air supply 27 arranged within said at least one containing tank 60 compartments 6 and 8 and having a plurality of outlets directed at a corresponding one of said plurality of rotatable log assembly 20 to rotate said rotatable log assembly 20 within the wastewater, said air supply 27 capable of being intermittently operable at a higher air flow rate to agitate the rotatable log assembly 20 and the wastewater;
- step 106: providing an outlet 28 for discharge of effluent treated by said treatment system after contact with the phototrophic bacteria and algae attached to the said rotatable log assembly 20;
- step 107: providing two integral settling zones 7 and 9 within said at least one containing tank 60, first one 7 disposed between said two compartments 6, 8, and the second one 9 disposed at the outlet end of the second compartment 8, said settling zones operable to remove biomass from the wastewater;
- step 108: providing a Dissolved Air Flotation DAF unit 11 downstream of said at least one containing tank 60 to affect the removal of excess biomass extracted with the treated wastewater from compartment 9 of said containing tank 60;
- step 109: providing a sulphur de-nitrification system unit 13 downstream of said DAF unit 11 consisting of a number of filtration and sulphur contact vessels;
- step 110: providing a disinfection unit 13 downstream of said DAF unit;
- step 111: providing a post-aeration unit 34 downstream of said disinfection unit 13;
- step 112: providing a receiving tank 14 for receiving settled solids and biomass extracted by said primary clarification device 3 and said DAF unit 11, fitted with supernatant decanting mechanism 18 and mixing/ aeration apparatus.

Preferably the wastewater treatment process according to the present invention further comprises the following step:
- step 113: providing a plurality of rotatable log assembly 20 with extended surface area of longitudinal 32 and circumferential 33 fins mounted such that they can rotate on their axis within at least one containing tank 60, compartments 6 and 8.

Preferably the wastewater treatment process according to the present invention is adapted to be housed within a greenhouse 35, 36.

Preferably the wastewater treatment process according to the present invention is adapted such that said greenhouse 35, 36 can be fitted with a photovoltaic electricity generation and storage system 37.

The efficacy of the present invention has been tested by means of some examples, which are to be understood as illustrative but not limitative of the present invention. The present invention, during seven months of full-scale trials, achieved the same or better levels of treatment in terms of treated wastewater characteristics compared to alternative treatment processes:
- 5-day Biological Oxygen Demand (BOD₅) removal % - 97.8% - average effluent BOD5 = 6.1 mg/l; compared to conventional systems average around 85% removal;
- Ammonium Ion (NH₄) removal % - 98.6% - average effluent concentration NH₄ = 0.64 mg/l; conventional systems with Nitrification 90% - 94% removal;
- Chemical Oxygen Demand (COD) removal % - 98.8% - average effluent COD = 9.0 mg/l; compared to conventional systems average around 95% removal;

These treatment performances were achieved with an average wastewater treatment time of 6 hours (range 4 hours to 8 hours).

The present invention effects several orders of magnitude higher treatment efficiency in terms of disinfection of harmful pathogens typically measured as E-coli in CFU/100 ml. Typical conventionally treated wastewater without an additional disinfection step are in the region of 4 log10 CFU/100 ml.

Testing during the full scale trial of the current invention average weekly sample results were less than 1,000 CFU /100 ml.

As it is deducible from the above description, the innovative technical solution herein described has the following advantageous features:
- treatment to a comparable or higher standard of effluent quality in a shorter time than alternative facilities;
- a high level of disinfection inherent in the treatment process;
- the treatment of wastewater with minimised electrical energy input;
- the minimising of wastewater treatment Carbon footprint environmental impact;
- the treatment of wastewater with minimal, if any, chemical addition;
- the maximisation of light availability to the phototrophic organisms;
- the optimisation of light/ dark sequencing for best performance;
- the excess biomass to freely move within the reactors;
- the rotation of the Logs to move the excess biomass to the settling zones for effective removal;
- wastewater treatment with no mains electricity supply;
- optimisation of performance with artificial light where necessary;
- the production of treated wastewater suitable for a range of reuse applications; and
- the maximisation of retained energy within the waste solids for energy recovery.

Therefore, the invention herein described presents a significant improvement with respect to the known technical solutions employed for the treatment of domestic and industrial wastewaters and, moreover, it answers to the increasing demand of highly efficient solutions for such an important environmental problem.

From the above description it is clear, therefore, that the phototrophic organism wastewater treatment apparatus and the relevant process as described hereinabove allow to reach the proposed objects.

It is similarly evident, to a person skilled in the art, that modifications and variants can be made to the solution described with reference to the attached figures, without departing from the teaching of the present invention and from the scope as defined in the appended claims.

## Claims

1. A phototrophic organism wastewater treatment apparatus (1) comprising:
- an inlet flow path (2) for receiving and pre-treatment of wastewater from a source;
- a first stage pre-treatment system (3, 4, 5) comprising:
- a primary clarification device (3),
- an equalisation and pre-conditioning tank (4), and a pre-conditioning chemical feed (5) connected to said equalisation and pre-conditioning tank (4);
- at least one containing tank (60) for containing wastewater received through said inlet flow path (2) and first stage pre-treatment system (3, 4, 5);
- a division of said at least one containing tank (60) into four compartments (6, 7, 8, 9), wherein said four compartments are arranged in series and the said four compartments are, respectively, a primary treatment reactor compartment (6), a primary settling zone compartment (7), a secondary treatment reactor compartment (8) and a secondary settling zone compartment (9);
- a plurality of rotatable log assembly (20) with extended surface area of longitudinal fins (32), angled in such a manner as to trap air to facilitate buoyant rotation, and circumferential fins (33), mounted in said at least one containing tank for rotation within the wastewater and each containing a phototrophic heterotrophic bacterial colony capable of digesting organic carbon in the wastewater and respiring carbon dioxide (C02), and an algal colony that uses the carbon dioxide (C02) and respires oxygen (02) and each rotatable log assembly comprising surfaces (20) for supporting phototrophic bacteria and algal growth, said surfaces arranged to
- be alternately immersed into and out of the wastewater, and
- be alternatively exposed and not exposed to a light source of either or both of sunlight or artificial light;
- an air supply (27) arranged within said at least one containing tank (60) compartments (6, 8) and having a plurality of outlets directed at a corresponding one of said plurality of rotatable log assembly (20) to rotate said rotatable log assembly (20) within the wastewater, said air supply (27) capable of being intermittently operable at a higher air flow rate to agitate the rotatable log assembly (20) and the wastewater;
- an outlet (28) for discharge of effluent treated by said treatment system after 750 contact with the phototrophic bacteria and algae attached to the said rotatable log assembly (20):
- two integral settling zones (7, 9), the first one (7) of the two integral settling zones being disposed between two of said compartments (6, 8) of said at least one containing tank (60) and the other one (9) of the two integral settling zones beind disposed at the outlet end of said tank compartment (8), said two integral settling zones (7, 9) being operable to remove bio solids from or with the wastewater;
- a DAF (Dissolved Air Flotation) unit (11) downstream of said at least one containing tank (60) to affect the removal of excess biomass extracted with the treated wastewater;
- a sulphur de-nitrification system unit (12) downstream of said DAF unit (11) consisting of a number of filtration and sulphur contact vessels;
- a disinfection unit (13) downstream of said de-nitrification system unit (12);
- a post-aeration unit (34) downstream of said disinfection unit (13);
- a receiving tank (14) for receiving settled solids and biomass extracted by said primary clarification device (3) and said DAF unit (11), fitted with supernatant decanting mechanism (18) and mixing/ aeration apparatus.

2. The wastewater treatment apparatus according to claim 1, wherein each of said four compartments (6, 7, 8, 9) defines an interior portion communicating with the wastewater within the corresponding at least one tank (60), said interior portion containing phototropic bacteria and algae.

3. The wastewater treatment apparatus according to claim 1, further comprising a plurality of rotatable log assembly (20) with extended surface area of longitudinal fins (32) and circumferential (33) fins mounted such that they can rotate on their axis.

4. The wastewater treatment apparatus according to claim 3, further comprising an air distribution system, said air distribution system comprising log rotation air distribution hose (27) said log rotation air distribution hose defining an air distributor along each of the said rotatable log assembly (20) and so positioned for directing of air to rotate each said rotating tube with extended surface area of longitudinal and circumferential fins.

5. The wastewater treatment apparatus of claim 1, wherein said wastewater treatment apparatus is adapted such that said treatment systems can be housed within a greenhouse (35, 36).

6. The wastewater treatment apparatus according to claim 5, wherein said wastewater treatment apparatus is adapted such that said greenhouse can be fitted with a photovoltaic electricity generation and storage system (37).

7. The wastewater treatment apparatus according to claim 6, said tanks are provided with a lightning system wherein said lighting system (38) comprises an array of artificial lights as supplement to or replacement of sunlight.

8. A phototrophic organism wastewater treatment process comprising the following steps:
step 100: receiving and pre-treating wastewater from a source through an inlet flow path (2);
step 101: firstly pre-treating through a pre-treatment system (3, 4, 5) comprising:
- a primary clarification device (3),
- an equalisation and pre-conditioning tank (4), and a pre-conditioning chemical feed (5) connected to said equalisation and pre-conditioning tank (4);
step 102: containing wastewater received through said inlet flow path (2) and first stage pre-treatment system (3, 4, 5) in at least one containing tank (60);
step 103: dividing said at least one containing tank (60) into four compartments (6, 7, 8, 9), wherein said four compartments are arranged in series and they are, respectively, a primary treatment reactor compartment (6), a primary settling zone compartment (7), a secondary treatment reactor compartment (8) and a secondary settling zone compartment (9);
step 104: providing a plurality of rotatable log assembly (20) with extended surface area of longitudinal fins (32), angled in such a manner as to trap air to facilitate buoyant rotation, and circumferential fins (33), mounted in said at least one containing tank (60) for rotation within the wastewater and each containing a phototrophic heterotrophic bacterial colony capable of digesting organic carbon in the wastewater and respiring carbon dioxide (C02), and an algal colony that uses the carbon dioxide (C0₂) and respires oxygen (02) and each rotatable log assembly (20) comprising surfaces for supporting phototrophic bacteria and algal growth, said surfaces arranged to be alternately immersed into and out of the wastewater and be alternatively exposed and not exposed to a light source of either or both of sunlight or artificial light;
step 105: providing an air supply (27) arranged within said at least one containing tank (60) and having a plurality of outlets directed at a corresponding one of said plurality of rotatable log assembly (20) to rotate said rotatable log assembly (20) within the wastewater, said air supply (27) capable of being intermittently operable at a higher air flow rate to agitate the rotatable log assembly (20) and the wastewater;
step 106: providing an outlet (28) for discharge of effluent treated by said treatment system after contact with the phototrophic bacteria and algae 825 attached to the said rotatable log assembly (20);
step 107: providing two integral settling compartments (7, 9) within at least one containing tank (60), the first one (7) disposed between said two compartments (6, 8), and the second one (9) disposed at the outlet end of the second compartment (8), said settling zones operable to remove biomass from the wastewater;
step 108: providing a DAF (Dissolved Air Flotation) unit (11) downstream of said at least one containing tank (60) to affect the removal of excess biomass xtracted with the treated wastewater;
step 109: providing a sulphur de-nitrification system unit (12) downstream of said DAF unit (11) consisting of a number of filtration and sulphur contact vessels;
step 110: providing a disinfection apparatus (13) downstream of said sulphur de-nitrification system unit (12);
step 111: providing a post-aeration unit (34) downstream of said disinfection apparatus (13); step 112: providing an excess solids holding/ thickening tank (14) for receiving settled solids and biomass extracted by said primary clarification device (3) and said DAF unit (11), fitted with supernatant decanting apparatus (18) and mixing/aeration apparatus.

9. The wastewater treatment process according to claim 8, further comprising the following step:
step 113: providing a plurality of rotatable log assembly (20) with extended 850 surface area of longitudinal (32) and circumferential (33) fins mounted such that they can rotate on their axis.

10. The wastewater treatment process according to claim 8, wherein said wastewater treatment process is adapted to be housed within a greenhouse (35, 36).

11. The wastewater treatment process according to claim 10, wherein said wastewater treatment process is adapted such that said greenhouse can be fitted with a photovoltaic electricity generation and storage system (37).

## Patentansprüche

1. Abwasserbehandlungsvorrichtung (1) für phototrophe Organismen, umfassend:
- einen Einlassströmungsweg (2) zum Aufnehmen und Vorbehandeln von Abwasser aus einer Quelle;
- ein Erste-Stufe-Vorbehandlungssystem (3, 4, 5), umfassend:
- eine Primärklärvorrichtung (3),
- einen Ausgleichs- und Vorkonditionierungstank (4) und eine chemische Vorkonditionierungszufuhr (5), verbunden mit dem Ausgleichs- und Vorkonditionierungstank (4);
- mindestens einen Aufnahmetank (60) zum Aufnehmen von Abwasser, aufgenommen durch den Einlassströmungsweg (2) und das Erste-Stufe-Vorbehandlungssystem (3, 4, 5);
- eine Unterteilung des mindestens einen Aufnahmetanks (60) in vier Kammern (6, 7, 8, 9), wobei die vier Kammern in Reihe angeordnet sind und die vier Kammern jeweils eine Primärbehandlungsreaktorkammer (6), eine Primärabsetzzonenkammer (7), eine Sekundärbehandlungsreaktorkammer (8) und eine Sekundärabsetzzonenkammer (9) sind;
- eine Vielzahl von drehbaren Blockanordnungen (20) mit verlängertem Oberflächenbereich von Längsrippen (32), abgewinkelt in einer solchen Weise, dass Luft eingeschlossen wird, um Auftriebsrotation zu erleichtern, und Umfangsrippen (33), montiert in dem mindestens einen Aufnahmetank zur Rotation innerhalb des Abwassers und jeweils enthaltend eine phototrophe heterotrophe Bakterienkolonie, fähig, organischen Kohlenstoff in dem Abwasser zu verdauen und Kohlendioxid (CO2) auszuatmen, und eine Algenkolonie, die das Kohlendioxid (CO2) verwendet und Sauerstoff (O2) ausatmet, und wobei jede drehbare Blockanordnung Oberflächen (20) zum Unterstützen von phototrophen Bakterien und Algenwachstum umfasst, wobei die Oberflächen angeordnet sind, um
- abwechselnd in und aus dem Abwasser getaucht zu werden, und
- abwechselnd ausgesetzt und nicht ausgesetzt zu werden zu einer Lichtquelle von einem oder beiden von Sonnenlicht oder künstlichem Licht;
- eine Luftzufuhr (27), angeordnet innerhalb der mindestens einen Aufnahmetank (60) Kammern (6, 8) und aufweisend eine Vielzahl von Auslässen, gerichtet auf eine entsprechende der Vielzahl von drehbaren Blockanordnungen (20), um die drehbare Blockanordnung (20) innerhalb des Abwassers zu drehen, wobei die Luftzufuhr (27) fähig ist, intermittierend mit einer höheren Luftströmungsrate betrieben zu werden, um die drehbare Blockanordnung (20) und das Abwasser zu bewegen;
- einen Auslass (28) zum Ablassen von Abwasser, behandelt durch das Behandlungssystem nach 750 dem Kontakt mit den phototrophen Bakterien und Algen, befestigt an der drehbaren Blockanordnung (20):
- zwei integrale Absetzzonen (7, 9), wobei die erste (7) der zwei integralen Absetzzonen zwischen zwei der Kammern (6, 8) des mindestens einen Aufnahmetanks (60) angeordnet ist und die andere (9) der zwei integralen Absetzzonen am Auslassende der Tankkammer (8) angeordnet ist, wobei die zwei integralen Absetzzonen (7, 9) betrieben werden können, um Biofeststoffe aus oder mit dem Abwasser zu entfernen;
- eine DAF (Dissolved Air Flotation) Einheit (11), stromabwärts des mindestens einen Aufnahmetanks (60), um die Entfernung von überschüssiger Biomasse, extrahiert mit dem behandelten Abwasser, zu beeinflussen;
- eine Schwefel-Denitrifikations-Systemeinheit (12), stromabwärts der DAF-Einheit (11), bestehend aus einer Anzahl von Filtrations- und Schwefelkontaktbehältern;
- eine Desinfektionseinheit (13), stromabwärts der Denitrifikations-Systemeinheit (12);
- eine Nachbelüftungseinheit (34), stromabwärts der Desinfektionseinheit (13);
- einen Aufnahmetank (14) zum Aufnehmen von abgesetzten Feststoffen und Biomasse, extrahiert durch die Primärklärvorrichtung (3) und die DAF-Einheit (11), ausgestattet mit einem Überstandsdekantierungsmechanismus (18) und einer Misch-/Belüftungsvorrichtung.

2. Abwasserbehandlungsvorrichtung nach Anspruch 1, bei welcher jede der vier Kammern (6, 7, 8, 9) einen Innenabschnitt definiert, kommunizierend mit dem Abwasser innerhalb des entsprechenden mindestens einem Tank (60), wobei der Innenabschnitt phototrope Bakterien und Algen enthält.

3. Abwasserbehandlungsvorrichtung nach Anspruch 1, ferner umfassend eine Vielzahl von drehbaren Blockanordnungen (20) mit verlängertem Oberflächenbereich von Längsrippen (32) und Umfangsrippen (33), montiert in einer solchen Weise, dass sie auf ihrer Achse rotieren können.

4. Abwasserbehandlungsvorrichtung nach Anspruch 3, ferner umfassend ein Luftverteilungssystem, wobei das Luftverteilungssystem einen Blockrotations-Luftverteilungsschlauch (27) umfasst, wobei der Blockrotations-Luftverteilungsschlauch einen Luftverteiler entlang jeder der drehbaren Blockanordnungen (20) definiert und so positioniert ist, dass Luft geleitet wird, um jedes Drehrohr mit verlängertem Oberflächenbereich von Längs- und Umfangsrippen zu drehen.

5. Abwasserbehandlungsvorrichtung nach Anspruch 1, bei welcher die Abwasserbehandlungsvorrichtung in einer solchen Weise angepasst ist, dass die Behandlungssysteme innerhalb eines Gewächshauses (35, 36) untergebracht werden können.

6. Abwasserbehandlungsvorrichtung nach Anspruch 5, bei welcher die Abwasserbehandlungsvorrichtung in einer solchen Weise angepasst ist, dass das Gewächshaus mit einem photovoltaischen Stromerzeugungs- und -speichersystem (37) ausgestattet werden kann.

7. Abwasserbehandlungsvorrichtung nach Anspruch 6, bei welcher die Tanks mit einem Beleuchtungssystem versehen sind, wobei das Beleuchtungssystem (38) eine Anordnung von künstlichen Leuchten als Ergänzung oder Ersatz von Sonnenlicht umfasst.

8. Abwasserbehandlungsverfahren für phototrophe Organismen, umfassend die folgenden Schritte:
Schritt 100: Aufnehmen und Vorbehandeln von Abwasser aus einer Quelle durch einen Einlassströmungsweg (2); Schritt 101: zuerst Vorbehandeln durch ein Vorbehandlungssystem (3, 4, 5), umfassend:
- eine Primärklärvorrichtung (3),
- einen Ausgleichs- und Vorkonditionierungstank (4) und eine chemische Vorkonditionierungszufuhr (5), verbunden mit dem Ausgleichs- und Vorkonditionierungstank (4);
Schritt 102: Aufnehmen von Abwasser, aufgenommen durch den Einlassströmungsweg (2) und das Erste-Stufe-Vorbehandlungssystem (3, 4, 5), in mindestens einem Aufnahmetank (60);
Schritt 103: Unterteilen des mindestens einen Aufnahmetanks (60) in vier Kammern (6, 7, 8, 9), wobei die vier Kammern in Reihe angeordnet sind und sie jeweils eine Primärbehandlungsreaktorkammer (6), eine Primärabsetzzonenkammer (7), eine Sekundärbehandlungsreaktorkammer (8) und eine Sekundärabsetzzonenkammer (9) sind;
Schritt 104: Bereitstellen einer Vielzahl von drehbaren Blockanordnungen (20) mit verlängertem Oberflächenbereich von Längsrippen (32), abgewinkelt in einer solchen Weise, dass Luft eingeschlossen wird, um Auftriebsrotation zu erleichtern, und Umfangsrippen (33), montiert in dem mindestens einen Aufnahmetank (60) zur Rotation innerhalb des Abwassers und jeweils enthaltend eine phototrophe heterotrophe Bakterienkolonie, fähig, organischen Kohlenstoff in dem Abwasser zu verdauen und Kohlendioxid (CO2) auszuatmen, und eine Algenkolonie, die das Kohlendioxid (CO2) verwendet und Sauerstoff (O2) ausatmt, und wobei jede drehbare Blockanordnung (20) Oberflächen (32, 33) zum Unterstützen von phototrophen Bakterien und Algenwachstum umfasst, wobei die Oberflächen angeordnet sind, um abwechselnd in und aus dem Abwasser getaucht zu werden und abwechselnd ausgesetzt und nicht ausgesetzt zu werden zu einer Lichtquelle von einem oder beiden von Sonnenlicht oder künstlichem Licht;
Schritt 105: Bereitstellen einer Luftzufuhr (27), angeordnet innerhalb des mindestens einen Aufnahmetanks (60) und aufweisend eine Vielzahl von Auslässen, gerichtet auf eine entsprechende der Vielzahl von drehbaren Blockanordnungen (20), um die drehbare Blockanordnung (20) innerhalb des Abwassers zu drehen, wobei die Luftzufuhr (27) fähig ist, intermittierend mit einer höheren Luftströmungsrate betrieben zu werden, um die drehbare Blockanordnung (20) und das Abwasser zu bewegen;
Schritt 106: Bereitstellen eines Auslasses (28) zum Ablassen von Abwasser, behandelt durch das Behandlungssystem nach dem Kontakt mit den phototrophen Bakterien und Algen (825), befestigt an der drehbaren Blockanordnung (20);
Schritt 107: Bereitstellen von zwei integralen Absetzkammern (7, 9) innerhalb mindestens eines Aufnahmetanks (60), wobei die erste (7) zwischen den zwei Kammern (6, 8) angeordnet ist und die zweite (9) am Auslassende der zweiten Kammer (8) angeordnet ist, wobei die Absetzzonen betrieben werden können, um Biomasse aus dem Abwasser zu entfernen;
Schritt 108: Bereitstellen einer DAF (Dissolved Air Flotation) Einheit (11), stromabwärts des mindestens einen Aufnahmetanks (60), um die Entfernung von überschüssiger Biomasse, extrahiert mit dem behandelten Abwasser, zu beeinflussen;
Schritt 109: Bereitstellen einer Schwefel-Denitrifikations-Systemeinheit (12), stromabwärts der DAF-Einheit (11), bestehend aus einer Anzahl von Filtrations- und Schwefelkontaktbehältern;
Schritt 110: Bereitstellen einer Desinfektionsvorrichtung (13), stromabwärts der Schwefel-Denitrifikations-Systemeinheit (12);
Schritt 111: Bereitstellen einer Nachbelüftungseinheit (34), stromabwärts der Desinfektionsvorrichtung (13); Schritt 112: Bereitstellen eines Überschussfeststoffaufnahme-/-verdickungstanks (14) zum Aufnehmen von abgesetzten Feststoffen und Biomasse, extrahiert durch die Primärklärvorrichtung (3) und die DAF-Einheit (11), ausgestattet mit einem Überstandsdekantierungsmechanismus (18) und einer Misch-/Belüftungsvorrichtung.

9. Abwasserbehandlungsverfahren nach Anspruch 8, ferner umfassend den folgenden Schritt:
Schritt 113: Bereitstellen einer Vielzahl von drehbaren Blockanordnungen (20) mit verlängertem (850) Oberflächenbereich von Längs- (32) und Umfangsrippen (33), montiert in einer solchen Weise, dass sie auf ihrer Achse rotieren können.

10. Abwasserbehandlungsverfahren nach Anspruch 8, bei welchem das Abwasserbehandlungsverfahren in einem Gewächshaus (35, 36) untergebracht werden kann.

11. Abwasserbehandlungsverfahren nach Anspruch 10, bei welchem das Abwasserbehandlungsverfahren in einer solchen Weise angepasst ist, dass das Gewächshaus mit einem photovoltaischen Stromerzeugungs- und -speichersystem (37) ausgestattet werden kann.

## Revendications

1. Appareil de traitement d'eaux usées d'organisme phototrophe (1) comprenant :
- un trajet d'écoulement d'entrée (2) pour recevoir et prétraiter des eaux usées provenant d'une source ;
- un système de prétraitement de premier étage (3, 4, 5) comprenant :
- un dispositif de clarification primaire (3),
- un réservoir d'égalisation et de préconditionnement (4), et une alimentation chimique de préconditionnement (5) raccordée audit réservoir d'égalisation et de préconditionnement (4) ;
- au moins un réservoir de stockage (60) pour contenir des eaux usées reçues par l'intermédiaire dudit trajet d'écoulement d'entrée (2) et dudit système de prétraitement de premier étage (3, 4, 5) ;
- une division dudit au moins un réservoir de stockage (60) en quatre compartiments (6, 7, 8, 9), dans lequel lesdits quatre compartiments sont agencés en série et lesdits quatre compartiments sont, respectivement, un compartiment de réacteur de traitement primaire (6), un compartiment de zone de décantation primaire (7), un compartiment de réacteur de traitement secondaire (8) et un compartiment de zone de décantation secondaire (9) ;
- une pluralité d'ensembles de rondin rotatif (20) avec une aire de surface étendue d'ailettes longitudinales (32), inclinées de manière à piéger de l'air pour faciliter une rotation flottante, et d'ailettes circonférentielles (33), montés dans ledit au moins un réservoir de stockage pour rotation à l'intérieur des eaux usées et chacun contenant une colonie bactérienne hétérotrophe phototrophe capable de digérer du carbone organique dans les eaux usées et de respirer du dioxyde de carbone (CO2), et une colonie d'algues qui utilise le dioxyde de carbone (CO2) et respire de l'oxygène (O2) et chaque ensemble de rondin rotatif comprenant des surfaces (20) pour supporter des bactéries phototrophes et une croissance d'algues, lesdites surfaces étant agencées pour
- être alternativement immergées dans et hors des eaux usées, et
- être alternativement exposées et non exposées à une source de lumière de l'une ou l'autre ou des deux parmi de la lumière solaire ou de la lumière artificielle ;
- une alimentation en air (27) agencée à l'intérieur dudit au moins un réservoir de stockage (60) dans des compartiments (6, 8) et ayant une pluralité de sorties dirigées vers un ensemble correspondant de ladite pluralité d'ensembles de rondin rotatif (20) pour faire tourner ledit ensemble de rondin rotatif (20) à l'intérieur des eaux usées, ladite alimentation en air (27) pouvant être actionnée de manière intermittente à un débit d'air plus élevé pour agiter l'ensemble de rondin rotatif (20) et les eaux usées ;
- une sortie (28) pour évacuation d'un effluent traité par ledit système de traitement après 750 contact avec les bactéries phototrophes et les algues fixées audit ensemble de rondin rotatif (20) :
- deux zones de décantation d'un seul tenant (7, 9), la première (7) des deux zones de décantation d'un seul tenant étant disposée entre deux desdits compartiments (6, 8) dudit au moins un réservoir de stockage (60) et l'autre (9) des deux zones de décantation d'un seul tenant étant disposée à l'extrémité de sortie dudit compartiment de réservoir (8), lesdites deux zones de décantation d'un seul tenant (7, 9) pouvant être actionnées pour éliminer des biosolides de ou avec les eaux usées ;
- une unité DAF (flottation d'air dissous) (11) en aval dudit au moins un réservoir de stockage (60) pour affecter l'élimination de la biomasse en excès extraite avec les eaux usées traitées ;
- une unité de système de dénitrification de soufre (12) en aval de ladite unité DAF (11) consistant en un certain nombre de cuves de filtration et de contact avec le soufre ;
- une unité de désinfection (13) en aval de ladite unité de système de dénitrification (12) ;
- une unité de post-aération (34) en aval de ladite unité de désinfection (13) ;
- un réservoir de réception (14) pour recevoir des solides décantés et de la biomasse extraite par ledit dispositif de clarification primaire (3) et ladite unité DAF (11), équipé d'un mécanisme de décantation de surnageant (18) et d'un appareil de mélange/aération.

2. Appareil de traitement d'eaux usées selon la revendication 1, dans lequel chacun desdits quatre compartiments (6, 7, 8, 9) définit une partie intérieure communiquant avec les eaux usées à l'intérieur de l'au moins un réservoir correspondant (60), ladite partie intérieure contenant des bactéries phototropes et des algues.

3. Appareil de traitement d'eaux usées selon la revendication 1, comprenant en outre une pluralité d'ensembles de rondin rotatif (20) avec une aire de surface étendue d'ailettes longitudinales (32) et d'ailettes circonférentielles (33) montées de sorte de pouvoir tourner sur leur axe.

4. Appareil de traitement d'eaux usées selon la revendication 3, comprenant en outre un système de distribution d'air, ledit système de distribution d'air comprenant un tuyau de distribution d'air de rotation de rondin (27), ledit tuyau de distribution d'air de rotation de rondin définissant un distributeur d'air le long de chacun desdits ensembles de rondin rotatif (20) et positionné pour diriger l'air afin de faire tourner chacun desdits tubes rotatifs avec une aire de surface étendue d'ailettes longitudinales et circonférentielles.

5. Appareil de traitement d'eaux usées selon la revendication 1, dans lequel ledit appareil de traitement d'eaux usées est adapté de sorte que lesdits systèmes de traitement peuvent être logés dans une serre (35, 36).

6. Appareil de traitement d'eaux usées selon la revendication 5, dans lequel ledit appareil de traitement d'eaux usées est adapté de sorte que ladite serre peut être équipée d'un système de génération et de stockage d'électricité photovoltaïque (37).

7. Appareil de traitement d'eaux usées selon la revendication 6, lesdits réservoirs sont pourvus d'un système d'éclairage dans lequel ledit système d'éclairage (38) comprend un réseau de lumières artificielles en complément ou en remplacement de la lumière solaire.

8. Procédé de traitement d'eaux usées d'organisme phototrophe comprenant les étapes suivantes :
étape 100 : recevoir et prétraiter des eaux usées provenant d'une source par l'intermédiaire d'un trajet d'écoulement d'entrée (2) ;
étape 101 : tout d'abord prétraiter par l'intermédiaire d'un système de prétraitement (3, 4, 5) comprenant :
- un dispositif de clarification primaire (3),
- un réservoir d'égalisation et de préconditionnement (4), et une alimentation chimique de préconditionnement (5) raccordée audit réservoir d'égalisation et de préconditionnement (4) ;
étape 102 : contenir des eaux usées reçues par l'intermédiaire dudit trajet d'écoulement d'entrée (2) et dudit système de prétraitement de premier étage (3, 4, 5) dans au moins un réservoir de stockage (60) ;
étape 103 : diviser ledit au moins un réservoir de stockage (60) en quatre compartiments (6, 7, 8, 9), dans lequel lesdits quatre compartiments sont agencés en série et ils sont, respectivement, un compartiment de réacteur de traitement primaire (6), un compartiment de zone de décantation primaire (7), un compartiment de réacteur de traitement secondaire (8) et un compartiment de zone de décantation secondaire (9) ;
étape 104 : fournir une pluralité d'ensembles de rondin rotatif (20) avec une aire de surface étendue d'ailettes longitudinales (32), inclinées de manière à piéger de l'air pour faciliter une rotation flottante, et d'ailettes circonférentielles (33), montés dans ledit au moins un réservoir de stockage (60) pour une rotation à l'intérieur des eaux usées et chacun contenant une colonie bactérienne hétérotrophe phototrophe capable de digérer du carbone organique dans les eaux usées et de respirer du dioxyde de carbone (CO2), et une colonie d'algues qui utilise le dioxyde de carbone (CO2) et respire de l'oxygène (O2) et chaque ensemble de rondin rotatif (20) comprenant des surfaces pour supporter des bactéries phototrophes et une croissance d'algues, lesdites surfaces étant agencées pour être alternativement immergées dans et hors des eaux usées et être alternativement exposées et non exposées à une source de lumière de l'une ou l'autre ou des deux parmi la lumière solaire ou la lumière artificielle ;
étape 105 : fournir une alimentation en air (27) agencée à l'intérieur dudit au moins un réservoir de stockage (60) et ayant une pluralité de sorties dirigées vers un ensemble correspondant de ladite pluralité d'ensembles de rondin rotatif (20) pour faire tourner ledit ensemble de rondin rotatif (20) à l'intérieur des eaux usées, ladite alimentation en air (27) pouvant être actionnée de manière intermittente à un débit d'air plus élevé pour agiter l'ensemble de rondin rotatif (20) et les eaux usées ;
étape 106 : fournir une sortie (28) pour l'évacuation d'un effluent traité par ledit système de traitement après contact avec les bactéries phototrophes et les algues 825 fixées audit ensemble de rondin rotatif (20) ;
étape 107 : fournir deux compartiments de décantation d'un seul tenant (7, 9) à l'intérieur d'au moins un réservoir de stockage (60), le premier (7) étant disposé entre lesdits deux compartiments (6, 8), et le second (9) étant disposé à l'extrémité de sortie du second compartiment (8), lesdites zones de décantation pouvant être actionnées pour éliminer la biomasse des eaux usées ;
étape 108 : fournir une unité DAF (flottation d'air dissous) (11) en aval dudit au moins un réservoir de stockage (60) pour affecter l'élimination de la biomasse en excès extraite avec les eaux usées traitées ;
étape 109 : fournir une unité de système de dénitrification de soufre (12) en aval de ladite unité DAF (11) consistant en un certain nombre de cuves de filtration et de contact avec le soufre ;
étape 110 : fournir un appareil de désinfection (13) en aval de ladite unité de système de dénitrification de soufre (12) ;
étape 111 : fournir une unité de post-aération (34) en aval dudit appareil de désinfection (13) ;
étape 112 : fournir un réservoir de rétention/épaississement de solides en excès (14) pour recevoir des solides décantés et de la biomasse extraite par ledit dispositif de clarification primaire (3) et ladite unité DAF (11), équipé d'un appareil de décantation de surnageant (18) et d'un appareil de mélange/aération.

9. Procédé de traitement d'eaux usées selon la revendication 8, comprenant en outre l'étape suivante :
étape 113 : fourniture d'une pluralité d'ensembles de rondin rotatif (20) avec une aire de surface étendue 850 d'ailettes longitudinales (32) et circonférentielles (33) montées de sorte de pouvoir tourner sur leur axe.

10. Procédé de traitement d'eaux usées selon la revendication 8, dans lequel ledit procédé de traitement d'eaux usées est adapté pour être logé dans une serre (35, 36).

11. Procédé de traitement d'eaux usées selon la revendication 10, dans lequel ledit procédé de traitement d'eaux usées est adapté de sorte que ladite serre peut être équipée d'un système de génération et de stockage d'électricité photovoltaïque (37).
